# EUROPEAN PATENT SPECIFICATION

(11) **EP 1 441 931 B1**
(45) Date of publication and mention of the grant of the patent: **22.06.2005**
(21) Application number: 02770131.7
(22) Date of filing: 30.10.2002
(51) Int. Cl.: B60R 22/12, G08B 5/00

(54) **IMPROVEMENTS IN OR RELATING TO FLEXIBLE WEBBING, BELTS OR STRAPS FOR SAFETY RESTRAINTS OR OTHERWISE**
VERBESSERUNGEN AN NETZEN, GURTEN UND BÄNDERN FÜR SICHERHEITSRÜCKHALTESYSTEME
AMELIORATIONS SE RAPPORTANT A DES SANGLES, DES CEINTURES OU DES LANIERES POUR DISPOSITIFS DE RETENUE OU ANALOGUES

(30) Priority: 30.10.2001 GB 0125989
(43) Date of publication of application: 04.08.2004
(73) Proprietor: Moran, John, Ormskirk, Lancashire L40 0SS (GB)
(72) Inventor: Moran, John, Ormskirk, Lancashire L40 0SS (GB)
(74) Representative: Cardwell, Stuart Martin
(86) International application number: PCT/GB2002/004888
(87) International publication number: WO 2003/037689

(56) References cited:
- WO-A-97/43125
- DE-A- 3 242 741
- DE-A- 4 028 271
- DE-A- 19 915 713
- GB-A- 2 186 612

## Description

The present invention relates to flexible woven safety strap restraints.

Envisaged applications for the flexible webbing, belts or straps of the invention include vehicle seat belts, aircraft seat belts, harnesses worn by people, especially for safety purposes but without limitation to same, child safety restrains, including reins, seat belts and harnesses, and flexible safety barrier materials provided for crowd management and/or safety purposes, tie downs for cargo, and rescue lines.

For convenience, the invention will be further described hereinafter in relation to its application to a seat belt for use in a road or rail vehicle or an aircraft, but other applications as mentioned above where the benefits of the invention are equally applicable will be readily apparent.

It is a legal requirement in this country and many other countries for occupants of vehicles to wear the seat belts fitted thereto.

The wearing of seat belts is acknowledged as being beneficial from a safety point of view. Thus it is in the interest of an occupant to wear the seat belt. Notwithstanding this, there are still vehicle occupants who flout the law. Many vehicles are fitted with electronically activated seat belt warning devices which give a visual and/or audible warning when the seat belt is not fastened whenever the vehicle ignition is turned on. However, these warnings can be easily disabled by connecting seat belt fastening even though the seat belts are not being worn.

It is not easy for the law enforcement agents (e.g. the police) to tell at a glance whether an occupant of a vehicle is wearing a seat belt, this is especially the case at night, and hence enforcing the law is not easy.

In some emergency situations, where a vehicle is involved in an accident for example, when a vehicle crashes off the road at night, it can be difficult to determine quickly which seats of a vehicle are occupied. It would be beneficial if some means were provided that would indicate which seats were occupied.

Two solutions to the above problem are discussed in British Patent published number 2186612 filed 17^{th} February 1986, and German patent application no. 4028271 filed 6^{th} September 1990, both disclosing the features of the preamble of claim 1.

The British specification proposes a high visability vehicle seat belt in which a separate strip of a high visability material that is luminous or reflective is attached to the vehicle seat belt strapping by stitching or by chemical bonding. However, the use of two layers of material mounted back to back is disadvantageous especially where the two materials are stitched together where a corrugated effect can arise. In both cases there is a risk of the pieces becoming separated and snagging in the seat belt mechanism, especially in the case of inertia reel type seat belts as used in vehicles. Furthermore, additional bulk is involved which affects flexibility of the belt and this in turn impacts on its use.

The German specification proposes that a luminous material is provided on or in the belt strap of a vehicle seat belt. The specification proposes that the material is applied as a film, as a coat of paint or by weaving the luminous material in the form of filaments into the webbing of the belt strap. My investigations have revealed that all these proposals give rise to practical difficulties. The disadvantages of the use of a separate film that is applied to the belt have already been mentioned above. The use of a paint is not seen as practical as it requires several processes to achieve a durable finish - e.g. primer, luminous coating, and sealer. Even so, it is doubtful that paint could be used that is sufficiently flexible not to have an impact on the operation of the belt where it is of inertia reel type.

The known reflective material yarns that could be woven into the belt webbing during manufacture all melt or become tacky at relatively low temperatures, e.g. below 100°C. It is frequently the case that the belt webbing for seat belts or otherwise is dyed after manufacture. The dying process involves subjecting the belt to temperatures in excess of 100°C. Accordingly this dictates that the reflecting filaments must be incorporated as a separate manufacturing step. This necessarily increases the costs.

It is an aim of the present invention to provide a simple solution to the above mentioned problems.

Accordingly a first aspect of the invention provides apparatus comprising a flexible woven safety strap restraint, comprising a high visibility material and characterised in that the high visibility material comprises an ink incorporating retro reflective elements having retro-reflective properties and in that the ink is applied to the flexible woven safety strap restraint by printing.

Another aspect of the invention provides a method of applying a high visibility retro-reflective material to a flexible woven safety strap restraint, in which method an ink incorporating retro-reflective elements is printed onto the flexible woven safety strap restraint.

Preferably the ink is applied using a screen printing process. More preferably still a reel to reel screen printing process is used.

Applying the retro-reflective material to the flexible woven strap as an ink solves the problems associated with the above mentioned proposals. The two layer construction is avoided, the ink can be applied after any dying process, the ink can incorporate pigments to match it to the colour of the strap or it can be a contrasting colour, and the resulting ink is as flexible as the substrate (i.e. web, belt or strap) on to which it printed.

A suitable ink comprises: 1) a water based ink. 2) the reflective elements (usually glass beads), and 3) a coupling agent. Parts 2 and 3 are packed together and part 1 added when the ink is to be used. A white reflective colour is preferred. Any suitable day time colour can be created using an appropriate pigment. In the same instances it may be preferable to have the retro-reflective material coloured to blend with that of the web, belt or strap under daylight conditions, but in others it may be preferable to have it in a contrasting colour so that it is visible under daylight conditions.

By retro-reflective, we mean that it acts to reflect light back towards the source of the illumination irrespective of the angle at which light hits the retro-reflective material.

The techniques involved in printing inks onto substrates (be they flexible woven materials or otherwise) are well known to one skilled in the art and as such it is not deemed necessary to describe them in this specification as no special modifications are required. Suffice to say that in the case of screen printing, the screen has to have a mesh that is large enough to permit the reflective element to pass through.

The ink may be printed in any desired form. It may be applied to all of the visible surface of the web, belt or strap, or just to parts thereof. More usually it will comprise a continuous or discontinuous band running along the length of the belt. It may incorporate words, device elements or useful pictograms as appropriate for safety applications. In the case of the application to a flexible safety barrier webbing for crowd control or safety purposes, spaced diagonal chevrons or arrow devices may be incorporated. Where the webbing is made from two or more colours, only one, or more than one, of the colours may have the retro-reflective ink applied thereto.

Yet another aspect of the invention provides a safety harness in the nature of a belt for an occupant of a seat, especially a seat for use in a vehicle, wherein the safety harness comprises a high visability material or coating carried by the belt.

More particularly, the high visability material is a retro-reflective material. A typical safety belt comprises a webbing strap. The high visability material may be in the nature of a coating applied to the belt. More particularly it comprises an ink incorporating reflective elements that is printed directly onto the belt.

A typical set belt is 50mm wide. The higher visability material preferably comprises a strip 25-40mm wide.

For a typical lap and diagonal seat belt, we envisage the high visability material extending along 1m-1 ½m thereof as a continuous or discontinuous band and to be positioned so that when the seat belt is deployed its extends over at least the diagonal part of the belt and optionally along the lap part. Thus the high visability material may or may not be visable when the belt is not deployed according to the preference in the particular application.

Applying the high visability material to the seat belt in the manner proposed according to the invention, has the advantage that it renders the seat belt visible ― especially at night - and so law enforcement officers can quickly see whether the occupants of a vehicle ― especially the driver, is wearing the seat belt. Furthermore, in an accident situation such as that mentioned above, it would be easy to see if a seat belt was deployed ― and thereby indicate quickly the location of the vehicle occupants. Likewise it will be appreciated how the application of the retro-reflective material as an ink will have benefits in the other envisaged applications, by attracting attention to the material to which it is applied.

The present invention will now be described further by way of example only with reference to the accompanying drawings; in which:-
Figure 1 is a diagrammatic perspective view of a motor vehicle having a seat belt in accordance with the present invention.
Figure 2 is a diagrammatic perspective view showing the application of the invention to a child seat restaint.
Figure 3 is a diagrammatic perspectic view showing the application of the invention to a diver's weight belt and aqua lung tank restraint/holder.
Figure 4 is a diagrammatic perspective view showing application of the invention to a man safety harness.
Figure 5 is a side view showing application of the invention to cargo tie down strapping.
Figure 6 is a diagrammatic view showing application of the invention to a safety line.
Figure 7 is a view of that part of the line shown encircled at B in figure 6.
Figure 8 is a front view of a safety barrier/crowd control barrier embodying the invention, and
Figure 9 is a view of that part of the barrier shown encircled at A in figure 8.

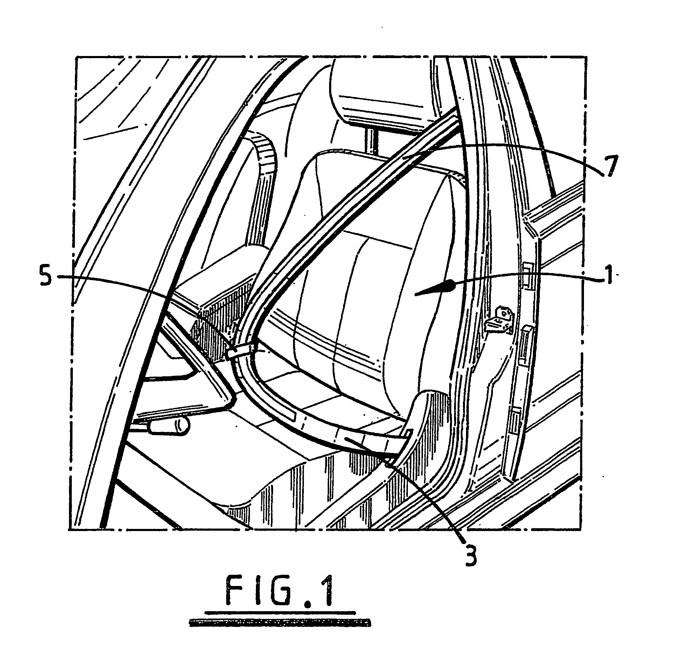

Referring to the drawing of figure 1, there is illustrated part of a vehicle and a front seat thereof 1. The seat belt thereof is of the lap and diagonal type and is shown at 3 in the position it adopts when the buckle thereof 5 is fixed to the mating attachment. The occupant is omitted for illustrative purposes.

The highly reflective ink that is applied to the belt in accordance with the present invention is shown at 7. A suitable ink is that sold by 3m giving a visability of the order of up to 250m. There are other manufacturers of similar products. Standard versions are available that in daylight possess either grey, silver or white colouration. When illuminated by artificial light it appears white and thus the material will be highly visible and indicate quickly that the seat belt is being worn.

It will be appreciated that the present invention is also applicable to other safety restraints, such as for example child car seat restraints, and aircraft seat belts, harnesses and flexible barriers.

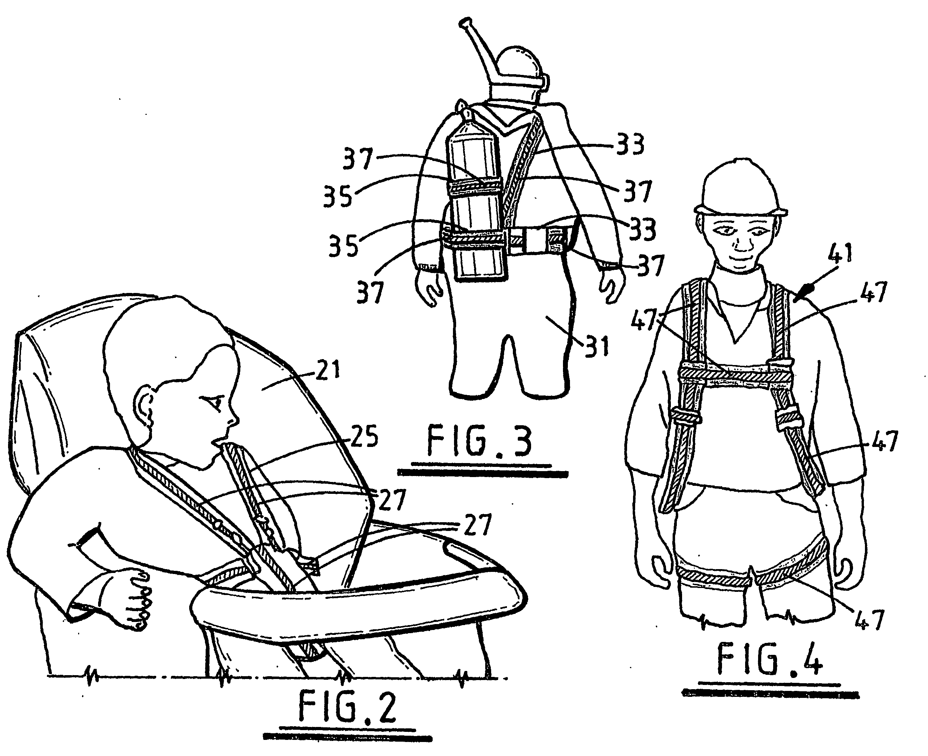

Figure 2 shows application of the reflective material 27 (shown hatched) to a harness 25 used for securing a child in a car seat 21. The harness is made of any suitable flexible material to which the retroreflective material is applied according to the invention.

Figure 3 shows a diver 31 wearing a weight belt 33 and an airtank restraint/holder 35, both comprising flexible webbing and both having the retro-reflective material 37 (shown hatched) applied thereto.

Figure 4 shows a person wearing a safety harness 41 which is provided with retro-reflective material 47 (shown hatched) applied according to the invention.

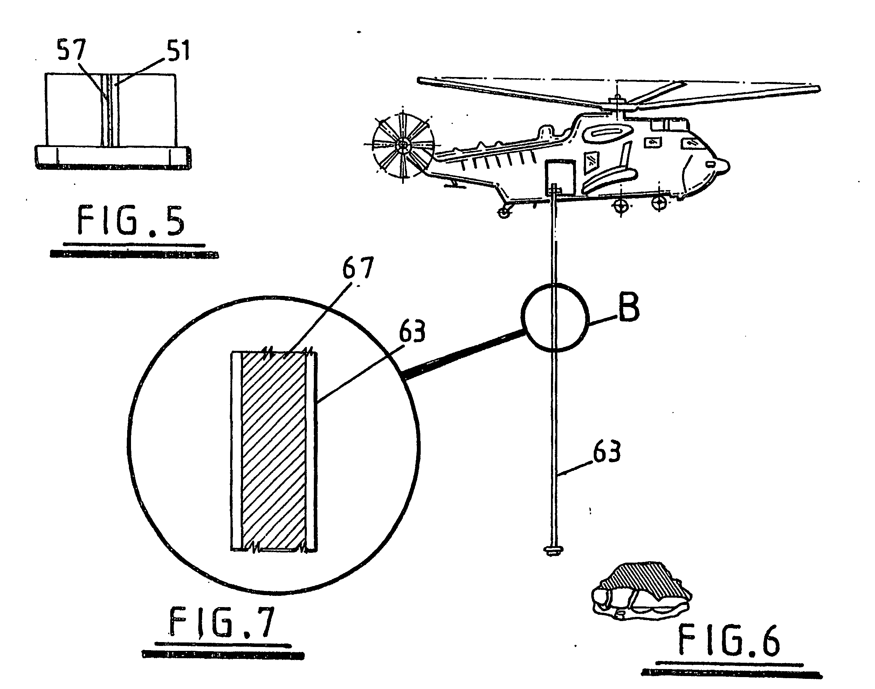

Figure 5 illustrates the application of the invention to webbing 51 that is used for cargo restraint, be it for transport by road, sea or air. The webbing restraint may take any suitable form. Preferably it includes a ratchet or over center clamp means. The retroflective material 57 is in the form of a continuous stripe. It may be discontinuous and may be in the form of legends for advertising purposes or otherwise.

Figure 6 illustrates a rescue vehicle (helicopter 61) from which is deployed a rescue line 63 comprising webbing (a section of which is shown larger in figure 7) and to which the retro-reflective material 67 (shown hatched) is applied as a continuous band.

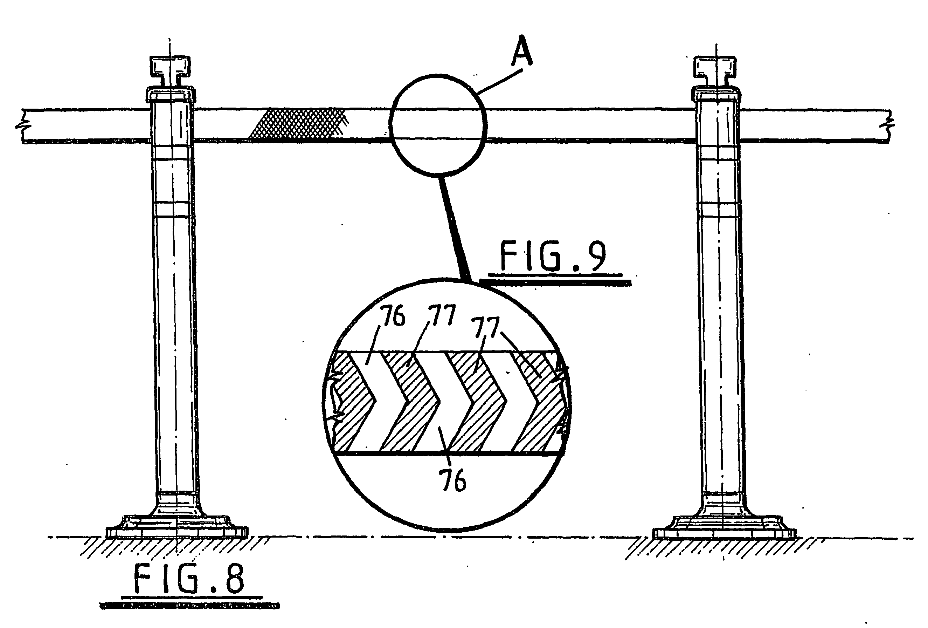

Figure 8 illustrates the application to a safety restraint or crowd control barrier system 71. Upstanding pillars 73 have flexible webbing 75 extending therebetween. A piece of the webbing is shown in greater detail in figure 9. It is printed alternative with differently coloured chevrons 76, 77. One of the chevrons (77) has the retro-reflective material printed thereon. It may be printed on one or both sides of the webbing. The webbing may be of fixed length and connected between the barriers, or may be arranged to telescope within one of the barriers as is well known in the art. The webbing with the reflective material applied thereto may be used in other applications between fixed supports, for example to close off exits to doors/openings and/or gangways.

## Claims

1. Apparatus comprising a flexible woven safety strap restraint, comprising a high visibility material and **characterised in that** the high visibility material comprises an ink incorporating retro reflective elements having retro-reflective properties and **in that** the ink is applied to the flexible woven safety strap restraint by printing.

2. Apparatus as claimed in claim 1 in which the retro-reflective elements comprise glass beads.

3. Apparatus as claimed in claims 1 or 2 in which the ink is applied by a screen printing process.

4. Apparatus as claimed in claim 1, 2 or 3 in which the flexible safety strap restraint is in the nature of a belt for an occupant of a seat.

5. Apparatus as claimed in claims 1, 2 or 3 when constructed as a seat belt harness for use in a motor vehicle or an aircraft.

6. Apparatus as claimed in claims 1, 2 or 3 when constructed as a harness to be worn by a person.

7. Apparatus as claimed in claims 1, 2 or 3 when constructed as a barrier element.

8. A method of applying a high visibility retro-reflective material to a flexible woven safety strap restraint, **characterized by** the steps of:
- providing a flexible woven safety strap restraint,
- printing an ink incorporating retro-reflective elements is printed onto the flexible woven safety strap restraint.

9. A method as claimed in claim 8 in which a screen printing process is used.

10. A method as claimed in claims 8 or 9 in which a reel to reel screen printing process is used.

## Patentansprüche

1. Vorrichtung, welche einen flexibel gewebten Sicherheits-Rückhaltegurt umfasst, welcher ein Material mit hoher Sichtbarkeit aufweist und **dadurch gekennzeichnet ist, dass** das Material mit hoher Sichtbarkeit eine Tinte umfasst, welche rückstrahlende Elemente beinhaltet, welche rückstrahlende Eigenschaften aufweisen, und dass die Tinte durch Bedrucken auf den flexibel gewebten Sicherheits-Rückhaltegurt aufgebracht wird.

2. Vorrichtung nach Anspruch 1, bei welcher die rückstrahlenden Elemente Glasperlen umfassen.

3. Vorrichtung nach Anspruch 1 oder 2, bei welcher die Tinte durch ein Siebdruck-Verfahren aufgebracht wird.

4. Vorrichtung nach Anspruch 1, 2 oder 3, bei welcher der flexible Sicherheits-Rückhaltegurt die Beschaffenheit eines Gurtes für einen Nutzer eines Sitzes aufweist.

5. Vorrichtung nach Anspruch 1, 2 oder 3, wenn sie als ein Gurtsystem für einen Sicherheitsgurt zur Verwendung in einem Motorfahrzeug oder einem Flugzeug konstruiert ist.

6. Vorrichtung nach Anspruch 1, 2 oder 3, wenn sie als ein von einer Person zu tragendes Gurtsystem konstruiert ist.

7. Vorrichtung nach Anspruch 1, 2 oder 3, wenn sie als ein Sperrelement konstruiert ist.

8. Verfahren zum Aufbringen eines hoch sichtbaren, rückstrahlenden Materials auf einen flexibel gewebten Sicherheits-Rückhaltegurt, **gekennzeichnet durch** die Schritte des:
Vorsehens eines flexibel gewebten Sicherheits-Rückhaltegurts,
- Bedruckens des flexibel gewebten Sicherheits-Rückhaltegurts mit einer Tinte, welche rückstrahlende Elemente beinhaltet.

9. Ein Verfahren nach Anspruch 8, bei welcher ein Siebdruck-Verfahren angewendet wird.

10. Verfahren nach Anspruch 8 oder 9, bei welcher ein Zweitrommel-Siebdruck-Verfahren angewendet wird.

## Revendications

1. Appareil comprenant un dispositif de retenue pour lanière de sécurité en tissu, comprenant un matériau très voyant et **caractérisé en ce que** le matériau très voyant comprend une encre intégrant des éléments rétroréfléchissants présentant des propriétés rétroréfléchissantes, et **en ce que** l'encre est appliquée par impression sur le dispositif de retenue de lanière de sécurité en tissu.

2. Appareil selon la revendication 1, dans lequel les éléments rétroréfléchissants comprennent des billes de verre.

3. Appareil selon la revendication 1 ou 2, dans lequel l'encre est appliquée par un procédé de sérigraphie.

4. Appareil selon la revendication 1, 2 ou 3 dans lequel le dispositif de retenue de lanière de sécurité est assimilable à une ceinture destinée à l'occupant d'un siège.

5. Appareil selon la revendication 1, 2 ou 3, lorsqu'il est réalisé sous forme de harnais de siège destiné à être utilisé dans un véhicule à moteur ou un avion.

6. Appareil selon la revendication 1, 2 ou 3, lorsqu'il est réalisé sous forme de harnais à porter par une personne.

7. Appareil selon la revendication 1, 2 ou 3, lorsqu'il est réalisé sous forme d'élément de barrière.

8. Procédé d'application d'un matériau rétroréfléchissant très voyant à un dispositif de retenue de lanière de sécurité en tissu, **caractérisé par** les étapes consistant à :
- fournir un dispositif de retenue de lanière de sécurité en tissu,
- imprimer une encre intégrant des éléments rétroréfléchissants sur le dispositif de retenue de lanière de sécurité en tissu.

9. Procédé selon la revendication 8, dans lequel est utilisé un procédé de sérigraphie.

10. Procédé selon la revendication 8 ou 9, dans lequel est utilisé un procédé de sérigraphie bobine-bobine.
